# EUROPEAN PATENT SPECIFICATION

(11) **EP 2 646 232 B1**
(45) Date of publication and mention of the grant of the patent: **19.04.2017**
(21) Application number: 11813389.1
(22) Date of filing: 18.11.2011
(51) Int. Cl.: B29D 30/24, B29D 30/26, B29D 30/00

(54) **METHOD, PLANT, AND FORMING DRUM FOR MANAGING FORMING DRUMS IN A TYRE BUILDING PROCESS**
VERFAHREN, ANLAGE UND AUFBAUTROMMEL ZUM MANAGEMENT VON AUFBAUTROMMELN IN EINEM VERFAHREN ZUR HERSTELLUNG VON REIFEN
MÉTHODE, INSTALLATION ET TAMBOUR À CONFECTIONNER POUR LA GESTION DE TAMBOURS À CONFECTIONNER DANS UN PROCÉDÉ DE FABRACATION DE PNEUMATIQUES

(30) Priority: 30.11.2010 IT PD20100365; 16.12.2010 US 423979 P
(43) Date of publication of application: 09.10.2013
(73) Proprietor: Pirelli Tyre S.p.A., 20126 Milano (IT)
(72) Inventor: MARCHINI, Maurizio, I-20126 Milano (IT); MERVIC, Stefano, I-20126 Milano (IT)
(74) Representative: Susanetto, Carlo
(86) International application number: PCT/IB2011/055173
(87) International publication number: WO 2012/073144

(56) References cited:
- EP-A2- 1 479 509
- WO-A1-2009/040594
- WO-A1-2009/058296
- WO-A1-2011/064500
- JP-A- 9 001 693

## Description

The present invention relates to a method for managing forming drums in a tyre building process and relates, more particularly, to the management of production changes in a building line for at least one tyre component.

It also relates to a process and a plant for building at least one tyre component designed to implement the above-mentioned method, and to a forming drum and a replacing apparatus for outer bodies of a forming drum appropriately designed to operate in said plant in accordance with said process.

A tyre generally comprises a ring-shaped toroidal carcass including one or a plurality of carcass plies, reinforced with reinforcing cords lying in substantially radial planes (a radial plane contains the axis of rotation of the tyre). Each carcass ply has its ends rigidly associated with at least one annular metal reinforcing structure, known as a bead core, which forms the reinforcement of the beads, i.e. of the radially inner ends of the tyre, designed to enable the tyre to be assembled on a corresponding mounting rim. A band of elastomer material, known as the tread band, is disposed in a radially external position with respect to said carcass, within which a raised pattern for contact with the ground is provided at the end of the moulding and vulcanization stages. A reinforcing structure, generally known as a belt structure, is interposed between the carcass and the tread band. In the case of tyres for motor vehicles, said structure usually comprises at least two radially superimposed strips of rubberized material provided with reinforcing cords, usually metal, disposed parallel to one another in each strip and intersecting with the cords of the adjacent strip, preferably symmetrically with respect to the equatorial plane of the tyre. Preferably, the belt structure further comprises, in a radially external position, at least on the ends of the underlying belt strips, at least a third layer of textile or metal cords, disposed circumferentially (at 0 degrees). Lastly, tyres of the tubeless type contain a radially internal layer, called the liner, which has impermeable properties in order to ensure the air-tightness of said tyre.

In the present specification and in the appended claims, a "component" of a tyre is considered to be any part of the tyre designed to perform a function. The components of a tyre may therefore be considered to be individual components (for instance the liner, the sub-liner, the anti-abrasive band, the bead core, the bead filler, the carcass ply, the belt strip, the belt underlayer, the tread band underlayer, the sidewall inserts, the sidewalls, the tread band, the reinforcing inserts), as well as structures in which two or a plurality of these members are assembled, for instance the carcass structure or the crown structure.

In the present specification and in the appended claims, the "carcass structure" is in particular considered to be a tyre component which comprises at least one carcass ply and a pair of bead cores, while the "crown structure" is considered to be a tyre component which comprises at least one belt strip and a tread band.

In the present specification and in the appended claims, a "building line" is considered to be a portion of a plant comprising a plurality of work stations in which, during operation and leaving aside production changes, a forming drum is moved in a continuous cycle.

Tyres are normally built in plants comprising one or a plurality of building lines which in turn include a plurality of work stations, in which the processing operations required for their production or for the production of a component thereof, for instance a carcass or a crown structure, are carried out in sequence. Typically, this building process involves the use of an appropriate forming drum, of overall cylindrical shape, on which a radially outer forming surface is defined, on which the various members making up the tyre or its component are successively deposited and processed at successive work stations.

Each forming drum is therefore moved between the various work stations from an initial work station to a final work station where the tyre, or its component, is separated from the forming drum and moved on for subsequent processing, and the forming drum is returned to the initial station.

It will be appreciated that in normal operating conditions, when a forming drum leaves a work station it is immediately replaced by a further forming drum on which the same processing operation is to be carried out. If the building line is to be correctly synchronized, all the movements of each forming drum along the line between one work station and the next must take place within a maximum predetermined time, called the cycle time.

In the present specification and in the appended claims, the "cycle time" is more particularly considered to be the time interval between the input (or output) of a forming drum into (from) a work station and the input (or output) into (from) the same work station of a successive forming drum, said work station being the work station with the highest processing time in a given building line.

This is a particularly stringent requirement when the tyre is obtained from a tyre building line in which the building of the crown structure and the building of the carcass structure takes place on two separate building lines synchronized with one another.

In this case, the crown structure, at the end of the respective building process, is separated from its forming drum and assembled with a carcass structure prepared in the meantime in its respective building line.

To ensure the correct and efficient operation of said plant it is necessary for said two building lines to operate in a synchronized manner, such that, during each cycle time, a crown structure and a carcass structure are made available from their respective building lines for coupling with one another.

In the case in which a change of production of the tyre model to be built is necessary, it is often necessary to replace the forming drums operating in one or both of the carcass and crown building lines, with the result that at the output of the final work station, the forming drum is returned to a store while a new forming drum, having a forming surface with the properties required by the new tyre model, is supplied to the initial work station.

The forming drum may be of the radial expansion type, as disclosed, for instance, in the International Patent Application WO 2008/152453 filed in the name of the Applicants.

In this type of forming drum, the outer body comprises a plurality of profiled sectors, disposed adjacent to one another around the circumference so as to form the forming surface of the drum and able to slide relative to one another in a circumferential direction. In this case, the replacement of the outer body of a forming drum requires the replacement of each profiled sector.

In any case, the replacement of an outer body of a forming drum is carried out manually outside the building line.

WO 2009/058296, WO2011/064500, JP 9001693 and EP 1479509 disclose respective forming drums having a central body and an outer body which is removably coupled to the central body in order to allow replacing of the same. WO 2009/040594 discloses a plant for producing tyres wherein respective sets of forming drums are used in a carcass structure building line and in a crown structure building line synchronised to each other.

The Applicants have firstly ascertained that the operation to replace an outer body is costly and time-consuming and becomes extremely costly when the forming drum is of the radial expansion type.

The Applicants have also observed that this drawback, as well as requiring a considerable commitment of human resources, makes it necessary to keep a large stock of forming drums entailing major burdens in terms of storage and material costs and places undesirable limits on the flexible production of tyre models or on productivity itself. The Applicants have also observed that the central body of a forming drum accounts for the lion's share of its cost.

The Applicants have thus become aware that a tyre building process which is to be genuinely efficient and productive should in the first place tackle and resolve the problems raised by the replacement of forming drums, so as to free the process from the down times and/or additional resources required by production schemes which are increasingly geared to the need for production flexibility.

Secondly, the Applicants have become aware that the replacement of the forming drums must necessarily involve the replacement only of the outer bodies of the drums to be replaced, so as to keep the number of central bodies as low as possible and limit management costs in the case of production changes.

The Applicants have lastly found that a building process for a tyre or a component thereof, is not affected in a substantially adverse way, from the point of view of productivity or flexibility, by any production changes, when it is possible to replace, between a final station and an initial station of the building line, the outer body of a forming drum in a time lower than or equal to the cycle time. More precisely, the operation to replace the outer body of a forming drum is not therefore seen as an auxiliary operation external to the process, but, in contrast, as an integral, albeit optional, operation of the process and therefore subject to the same time constraints as any other operation to build the tyre or its component.

A first aspect of the invention relates in particular to a method for managing a production change in a building line for at least one tyre component, according to claim 1.

The Applicants consider that, as a sufficient number of outer bodies are available, it is enough to have a number of central bodies equal to the number of work stations of the building line increased by one to cope with any sequence and number of production changes, without the modification of the forming surface of the forming drum having repercussions on the overall line production time (also known in the sector as the lead time).

A second aspect of the invention relates to a plant, according to claim 8.

The Applicants consider that the plant can successfully manage the production changes requiring a modification of the outer body of the forming drum, while leaving the central bodies circulating along the building line unchanged.

A third aspect of the present invention relates to a forming drum for the building of at least one tyre component, according to claim 9.

This is a simple and at the same time efficient way of providing a coupling system which enables an outer body to be coupled to a central body of a forming drum.

The Applicants consider that the outer body of a forming drum may be separated from a central body and replaced by a different outer body in a sufficiently short time to respect the time constraints imposed by the cycle time of the process.

The Applicants consider that it is possible to carry out the operations to replace the outer bodies of the forming drums in an automatic or semiautomatic manner, thereby limiting or even avoiding the need for manual intervention by an operator and in general ensuring that the replacement operation is much more repeatable and reliable.

The present invention, in at least one of the above-mentioned aspects, may include at least one of the preferred features described below.

Preferably, said replacing of said first outer body on said central body with said second outer body takes place in a period of time equal to or less than said cycle time reduced by the time required by said final work station.

In this way, the overall time of the building line will be equal to the cycle time multiplied by the number of work stations not counting the outer-body replacing station. The overall line time therefore remains equal to the overall time of a conventional building line, in which the replacement operation takes place externally to the line, but with the evident advantage that a number of central bodies greater than the number of work stations of the conventional line is not required for a production change.

Preferably, during said replacing, said first outer body is unfitted from said central body by means of a first outer-body support member which holds said first outer body in a fitted arrangement.

In a preferred embodiment of the invention, during said replacing, said first and second outer bodies are moved away from and towards said central body, respectively, whilst being held in a fitted arrangement on respective support members.

This feature makes it possible to provide a first level of automation of the process making it possible to reduce manual interventions by the operator. It is further preferred that, when said first and second outer bodies are not fitted on said central body, they are placed in a store whilst being held in a fitted arrangement on respective support members.

This makes it possible to optimise the management of the stocks of external bodies in terms of both storage space and speed of recovery of the outer body when there is a replacement request.

Preferably, when said first and second outer bodies are not fitted on said central body, they are held in a fitted arrangement on respective identically shaped support members.

This feature provides efficient standardization of the support members.

In a preferred embodiment of the invention it is also provided that, during said replacing, the movement of said first and second outer bodies away from and towards said central body, respectively, is performed by means of a robotized arm.

This feature also helps to increase the degree of automation of the process and further reduces the need for manual action by the operator.

Preferably, said central body and said first and second outer bodies can be fitted together and separated by relative movement of said central body relative to said outer body.

More preferably, said central body and said first and second outer bodies can be fitted together and separated by relative movement along a predefined fitting direction.

In this way, the replacement of an outer body on the same central body may take place by means of a simple and rapid operation, in particular a relative movement between two bodies, preferably by means of translation.

The central body is radially expansible.

This is advantageous in that it provides forming drums whose diameters can where necessary be varied, thereby increasing their potential for use when building different tyre components.

Said predefined fitting direction is preferably a radial direction.

In this way, the operations to fit and separate an outer body on and from a central body may be advantageously carried out by using the radial expansion capacity of the central body.

In a preferred embodiment of the invention, said first outer body is preferably held by said first support member in a radially outer position relative to said central body.

This is advantageous in that there is no interference with the support member during the radial expansion movement of the central body.

In a preferred embodiment of the invention, said replacing comprises the fitting-together of said second outer body and said central body, said fitting-together including:
- arranging said central body in a radially contracted condition,
- moving said second outer body held in a fitted arrangement on a second outer-body support member, to a position coaxial with and radially outside said central body,
- expanding said central body radially so as to fit said second outer body and said central body together,
- releasing said second outer body from said second support member.

The cycle time is preferably between about 60 and about 90 seconds.

The cycle time is more preferably between about 65 and about 80 seconds.

In this way, it is possible to use the present invention within the most sophisticated tyre building processes currently in use in the sector.

In a first embodiment, said tyre component comprises a carcass structure of said tyre.

In an alternative embodiment, said tyre component comprises a crown structure of said tyre.

In a preferred embodiment of the invention, in said final work station there is provision for the fitting-together of a crown structure and a carcass structure of said tyre.

It is further preferred that the need for said replacing is ascertained by a control unit which controls the movement of said forming drum between said work stations.

Preferably, at a first moment, the forming drums that are present in said plurality of work stations, excluding said replacing station, are formed by a first set of central bodies and by a first set of outer bodies whereas, at a second moment following the first moment by a period of time equal to said cycle time, the forming drums that are present between the work stations, excluding said replacing station, are formed by a second set of central bodies identical to said first set of central bodies and by a second set of outer bodies that differs from said first set of outer bodies by at least one element.

Preferably, in said replacing station, the outer body of a forming drum can be replaced by a different outer body on the same central body.

According to a preferred embodiment, there are associated with said replacing station a store for outer bodies that are not fitted on a central body, as well as devices for the movement of the outer bodies between said store and said replacing station.

It is also preferable for said profiled sectors to be arranged in positions adjacent to one another with a capacity for relative sliding in a circumferential direction.

This feature enables the radial contraction and expansion of the central body, thereby making it possible to modify the diameter of the forming drum.

In a preferred embodiment, each rib is engaged, in the same radial plane, by a pair of said hooks which are arranged on opposite sides of said rib.

This provides a stable coupling of the outer body on the central body, preventing any uncontrolled relative sliding in the circumferential direction.

Preferably, at least one inclined surface which is not perpendicular to said fitting direction is provided on said seat and/or on said hook to facilitate the insertion of said hook in said seat.

Preferably, at least one inclined surface which is not perpendicular to said fitting direction is also provided on said seat and/or on said hook to facilitate the release of said hook from said seat.

As a result of these features, the pivoting of the hook to engage with or be released from the seat, thereby enabling the fitting-together or, respectively, the separation of the central body with respect to the outer body, is obtained as a simple result of the abutment of the hook on the member which defines the seat following the movement of the central body with respect to the outer body in the fitting direction.

Preferably, a pin extends through said hook in the region of a shank thereof, said pin being arranged parallel to a plane of pivoting of said hook and said hook being urged against a head of said pin by a resilient element.

In a preferred embodiment, said quick coupling devices comprise a plurality of radial locating pins provided on one of said central body and said outer body and a corresponding plurality of holes in which the pins are housed in engagement, and which are formed on the other of said central body and said outer body.

In this way, it is possible to obtain the correct alignment in both the axial direction and the circumferential direction between the central body and the outer body during the release operation.

Preferably, said support member is shaped as a cylinder so as to surround said first outer body on the side opposite said central body.

It is also preferable for the gripping elements of the support member, when moved into the operating position, to abut on the outer body on the side of said central body, so as to prevent a radial contraction of said outer body.

Other advantages and features of the present invention will become clear from the following detailed description of a preferred embodiment thereof, given with reference to the appended drawings which are provided purely by way of non-limiting example and in which:
- Fig. 1 is a schematic diagram of a plant for the building of at least one tyre component embodied to operate in accordance with the method and process of the present invention;
- Fig. 2 is a diagrammatic perspective view of a forming drum used in the plant of Fig. 1;

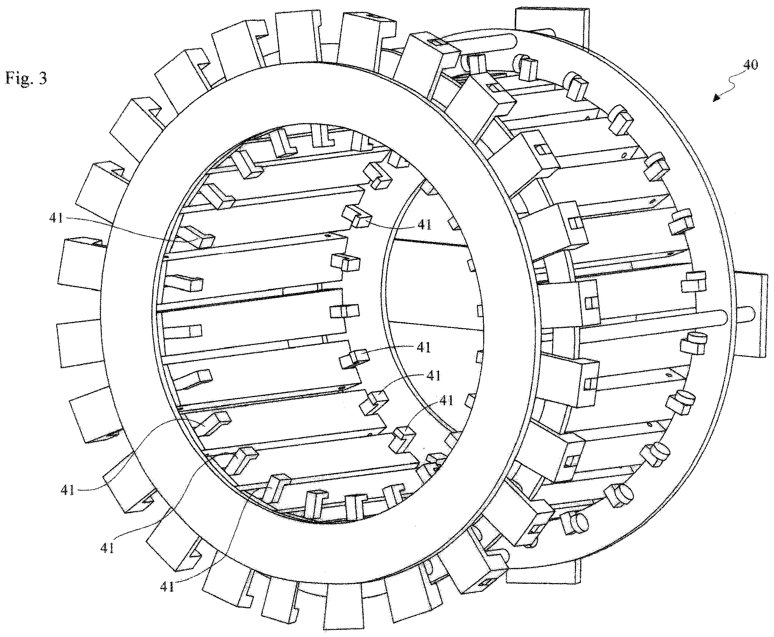

- Fig. 3 is a diagrammatic perspective view of an outer-body support member which can be fitted on the forming drum of Fig. 2;

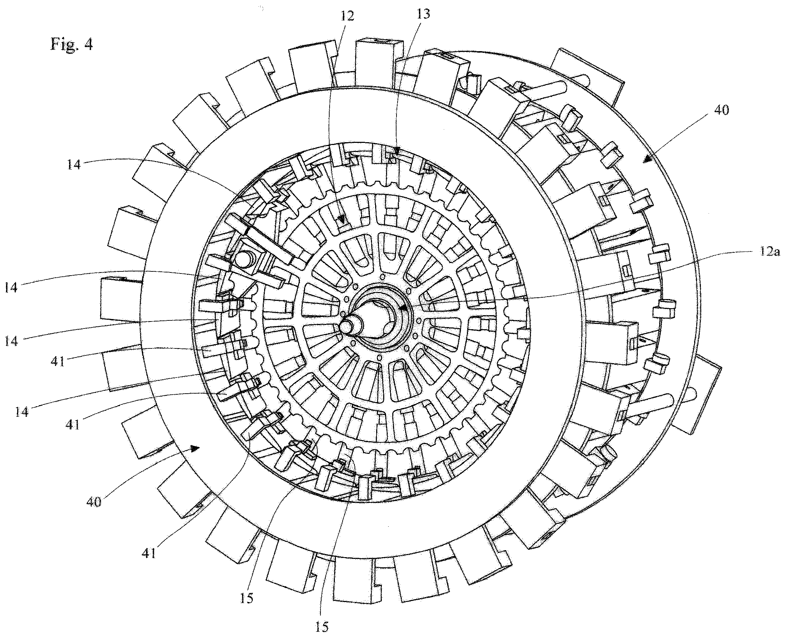

- Fig. 4 is a diagrammatic perspective view of the forming drum of Fig. 2 fitted on the support member of Fig. 3;
- Fig. 5 is a diagrammatic perspective view of a detail of the forming drum and the support member of Fig. 4;

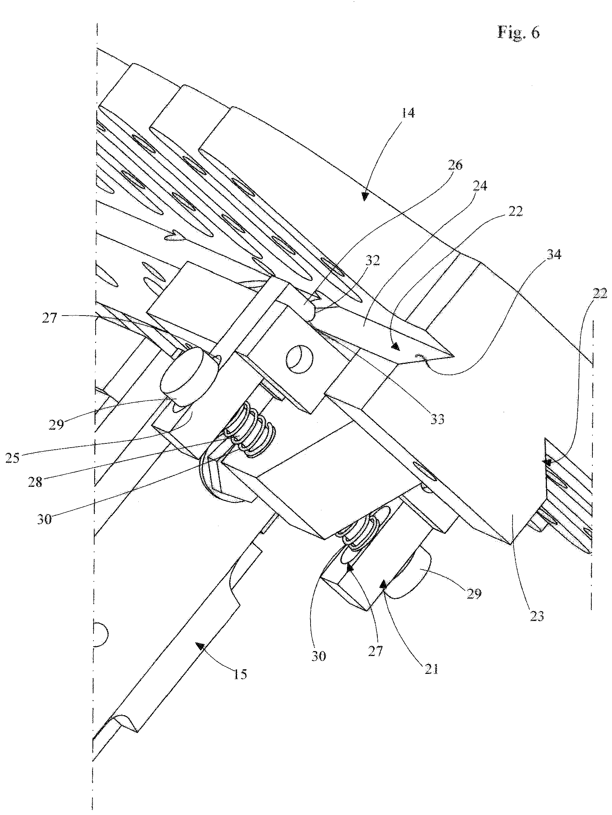

- Fig. 6 is a diagrammatic perspective view of a detail of the forming drum of Fig. 3.

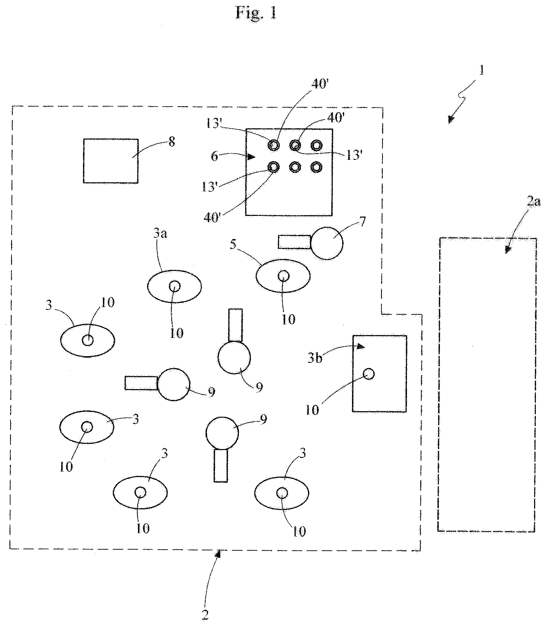

In the preferred embodiment described in detail, the plant 1 (Fig. 1) comprises a building line 2 designed for the production of a crown structure of a tyre by means of successive operations to be carried out in successive appropriately disposed work stations. As an alternative, the method and process of the invention may be applied to the building line provided for building a carcass structure of the tyre, or more generally for the building of the tyre as a whole in which a complete tyre is built along the same line from a carcase structure and a crown structure.

The building line 2 comprises a plurality of work stations 3, each provided to carry out a specific processing operation on a forming drum 10 which is moved from one station to the next in a predetermined sequence of processing stages.

The crown structure is in particular built using a plurality of forming drums 10, each of overall cylindrical shape and of axis X, on which a radially outer forming surface 11 is defined, on which the various members making up the crown structure are successively deposited and processed in the work stations 3.

Each forming drum 10 comprises a central body 12 and an outer body 13 fitted on the central body 12 in a radially outer position in order to define the forming surface 11.

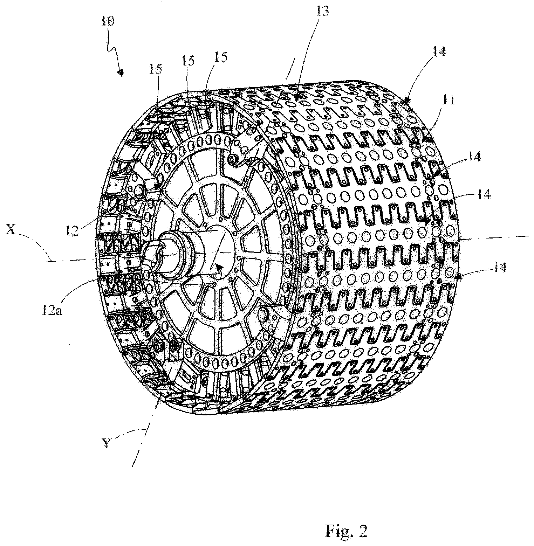

In the preferred embodiment described here (Fig. 2), the central body 12 comprises a radial expansion mechanism 12a, by means of which the forming drum 10 may move, in a regular and reversible manner, between a radially contracted position having a minimum diameter, and a radially expanded position having a maximum diameter greater than the minimum diameter.

To enable this movement of expansion and contraction in a radial direction Y, perpendicular to the axis X, the outer body 13 comprises a plurality of profiled sectors 14, each of which defines, on a radially outer side, a portion of the forming surface 11, which are disposed adjacent to one another and can slide relative to one another in a circumferential direction defined on the forming surface 11.

Each profiled sector 14 is mounted at its opposing axial ends on a pair of arms 15 of the central body 12, extending radially and connected to the radial expansion mechanism 12a, in order to move the profiled sectors 14 between the radially expanded position and the radially contracted position.

The radial expansion mechanism 12a of the forming drums 10 may be of any appropriate type. A preferred example of a radial expansion mechanism is disclosed in the above-mentioned International Patent Application WO 2008/152453 in the name of the Applicants.

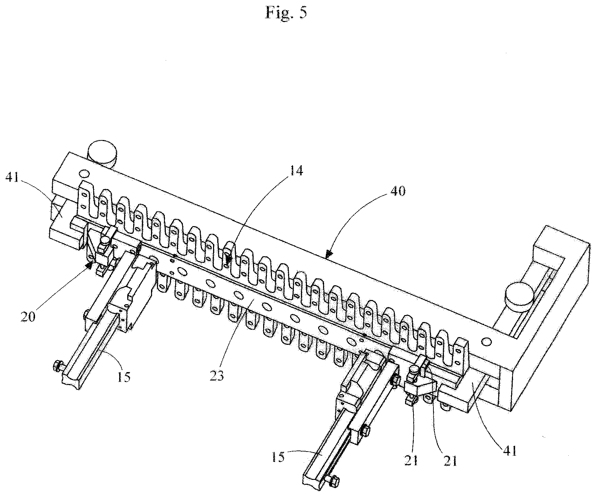

The forming drums 10 further comprise quick coupling devices 20 (Fig. 5) disposed such that the central body and the outer body can be fitted together and separated by relative movement of the central body 12 with respect to the outer body 13 in a predefined coupling direction, in particular in the radial direction Y defined by the expansion/contraction movement of the central body 12.

Each quick coupling device 20 in particular comprises a pair of hooks 21, mounted at the end of each arm 15, which can pivot resiliently within the same radial plane, containing the axis X, in order to snap engage in respective seats 22 provided in the profiled sector 14.

Each profiled sector 14 in particular comprises, on its radially inner side, opposite the forming surface 11, a rib 23 extending parallel to the axial direction X along the whole extension of the profiled sector 14, and the seats 22 are defined by respective grooves 24 obtained on the rib 23 on circumferentially opposing sides.

Each hook 21 comprises a shank 25 extending in the radial direction Y and connected to the arm 15, and a tooth 26 projecting from the shank 25 at its end facing the profiled sector 14 in order to engage with the seat 22.

Each pair of hooks 21 mounted on the same arm 15 is traversed, at the location of a respective hole 27, by a pin 28 parallel to the plane of pivoting of the hooks 21, and provided at its opposing axial ends with heads 29.

A resilient member 30 mounted about the pin 28 in order to urge the shank 25 against the head 29 of the pin 28 is further provided between the shank 25 of each hook 21 and the arm 15.

Advantageously, a first surface 32 inclined in a non-perpendicular manner with respect to the radial direction Y is defined on the tooth 26 so as to facilitate the pivoting movement of the hook 21 when, during the radial displacement movement towards the profiled sector 14, it abuts against the rib 23.

The hook 21 in the pivoted position may thus be moved to the location of the groove 24, within which, under the action of the resilient member 30, its tooth 26 is engaged.

Similarly, a second surface 33 inclined in a non-perpendicular manner with respect to the radial direction Y is defined on the tooth 26, symmetrically with respect to the first surface 32, so as to facilitate the pivoting movement of the hook 21 when it is released from the seat 22 when the arm 15 is moved away from the profiled sector 14.

The groove 24 also preferably has an inclined surface 34 to facilitate the release of the hook 21 from the seat 22.

The quick coupling devices 20 further comprise a plurality of locating pins extending radially from the arms 15 and a corresponding plurality of holes obtained on each profiled sector 14 to house and engage the locating pins.

The operation to release the outer body 13 from the central body 12 takes place by means of an apparatus comprising an outer-body support member 40 provided, for each profiled sector 14, with at least one gripping element 41 which may be pivoted between an operative position in which it abuts and holds the outer body 13 in a fitted arrangement and a non-operative position in which it releases the outer body 13.

The support member 40 is shaped as a cylinder so as to surround the outer body 13 on the side opposite the central body 13 and the gripping elements 41, preferably shaped as hooks, can pivot in a plane comprising the axial direction X and the radial direction Y in order to abut against the profiled sectors 14 at their respective axial ends, as is clearly shown in Fig. 5, on the side facing the central body 12.

All the gripping elements 41 are preferably connected and controlled by a single control member (not shown in the accompanying drawings) able to cause the gripping elements 41 to move in a synchronized manner.

The building line 2 operates, for instance, in the following manner.

As mentioned above, a forming drum 10 is initially moved to an initial work station 3a, where a first processing operation to build the belt structure is carried out, after which it is moved to a subsequent work station 3 where a second processing operation is carried out, and so on until it reaches a final work station 3b where the belt structure is separated from the forming drum 10 and coupled, for instance, to a carcass structure built in parallel in an adjacent line 2a for building a carcass structure, in accordance with a general scheme disclosed, for instance, in International Patent Application WO 2009/040594 in the name of the Applicants.

It will be appreciated that when a forming drum leaves a work station 3 to be moved to the subsequent work station, the work station 3 is occupied by a successive forming drum such that, in operation, all the work stations are occupied by respective forming drums 10.

The movement of the forming drums between the various work stations 3 is advantageously carried out by one or more dedicated robotized arms 9.

Correct management of the building line 2 requires that the dwell time of the forming drum 10 in each work station and the time for the movement of the forming drum from one work station to the next work station are overall no greater than the cycle time decided for the building line 2. Said cycle time is between about 60 and about 90 seconds, preferably between about 65 and about 80 seconds.

The building line 2, between the work stations 3, comprises a replacing station 5 interposed in operation between the final work station 3b and the initial work station 3a.

The replacing station 5 is designed to replace a first outer body 13 mounted on the forming drum 10 with a second outer body 13' having a different shape, thereby modifying the forming surface 11 of the forming drum 10.

The operation to replace the first outer body 13 with a second outer body 13' includes the release of the first outer body 13 from the central body 12 and the successive coupling of the second outer body 13' to the same central body 12.

In the release phase, the first outer body 13, previously brought into the position of maximum radial expansion, is coupled with a support member 40 by means of the gripping elements 41 pivoted to engage the profiled sectors 14. In this way, the first outer body 13 is held by the first support member 40 in a radially outer position with respect to the central body 12, so that by moving the central body 12 into the radially contracted position the hooks 21, also facilitated by the inclined surfaces 33 and 34, are released from the seats 22 thereby separating the central body 12 from the first outer body 13 which remains held in a fitted arrangement on the first support member 40.

The first support member 40 is then moved away from the central body 12 and taken, still coupled to the first outer body 13, to a store 6 associated with the replacing station 5 where the outer bodies needed for the building process, all held in a fitted arrangement on respective support members, are stored.

It will be appreciated that the outer bodies in the store 6 have the same or different configurations so as adequately to meet the production needs of the building process. In any case, all the outer bodies are capable of appropriate coupling with both the central body 12 and the support member 40, so that both may be identically shaped thereby increasing the degree of standardization of the process.

In the meantime, a second support member 40' on which the second outer body 13' is fitted is supplied to the central body 12, still in the radially contracted position, aligning it in a coaxial position and centring it in a radially outer position external to the latter.

The central body 12 is then brought into the radially expanded position so as to cause the hooks 21 to engage with the respective seats 22 of the second outer body 13' thereby coupling the latter to the central body 12. At this point, the second support member 40' may be released from the second outer body 13' and moved away from the forming drum 10 which has now been modified and is ready to be moved to the initial work station 3a and to recommence the processing cycle.

The movement of the first and second outer body 13, 13' respectively between the store 6 and the central body 12 is preferably carried out by movement devices comprising, for instance, a robotized arm 7.

In general, it is not necessary to replace the outer body for each processing cycle of each forming drum, as this operation is required only in the event of a production change.

This requirement is ascertained each time by a control unit 8 which manages the overall operation of the building line 2, including the movement of the various forming drums 10 between the various work stations 3 and the operating stages carried out in the individual work stations 3.

In a first embodiment, the operation to replace the first outer body 13 with the second outer body 13' on the central body 12 takes place in a time which is not greater than the cycle time of the building line 2.

In this case, from an operational point of view, the replacing station 5 is considered, for all intents and purposes, as one of the other work stations 3 respecting the same time constraints imposed by the cycle time.

The overall production time of the line (lead time) is given by the cycle time multiplied by the work stations 3, including the replacing station 5.

When the forming drum 10 leaving the final station 3b does not require the replacement of the outer body 13, it is moved to the replacing station 5 where it waits to be moved to the initial work station 3a.

In this operating situation, when the building line 2 is operating normally, there is a first moment when the forming drums 10 present between all the work stations 3, 3a, 3b and 5 form a first set of central bodies 12 and a first set of outer bodies.

In the case of a production change of the crown structure which requires a change of the forming surface 11 of the forming drums, there is also a second moment, following the first moment by a time equal to the cycle time, in which the forming drums 10 present between all the work stations 3, 3a, 3b and 5 form a second set of central bodies 12 which is identical to the first set of central bodies, and a second set of outer bodies which differs from the first set of outer bodies by at least one element, i.e., for instance, the new outer body which, in the time between the first and the second moment, has replaced an outer body previously mounted on a central body 12.

In a second and more preferred embodiment, the operation to replace the first outer body 13 with the second outer body 13' on the central body 12 takes place in a time which is not greater than the cycle time of the building line 2 reduced by the time required by the final work station 3b.

In this case, the time constraints imposed on the replacing station 5 are more stringent but make it possible, from the operational point of view, to consider the replacing station 5 as part of the final work station 3b as the cycle time of the line 2 is sufficient to carry out both the operations of the work station 3b and, if required, the operations of the replacing station 5. The overall production time of the line (lead time) is given by the cycle time multiplied by the work stations 3, without taking account of the replacing station 5.

When the forming drum 10 leaving the final station 3b does not require the replacement of the outer body 13, it is moved directly to the initial work station 3a in practice avoiding the replacing station 5.

In this operating situation, when the building line 2 is operating normally, there is a first moment when the forming drums 10 present between the work stations 3, excluding the replacing station 5, form a first set of central bodies 12 and a first set of outer bodies.

In the case of a production change of the crown structure which requires a change of the forming surface 11 of the forming drums, there is also a second moment, following the first moment by a time equal to the cycle time, in which the forming drums 10 present between the work stations 3, excluding the replacing station 5, form a second set of central bodies 12 which is identical to the first set of central bodies, and a second set of outer bodies which differs from the first set of outer bodies by at least one element, i.e. the new outer body which, in the time between the first and the second moment, has replaced an outer body previously mounted on a central body 12.

## Claims

1. A method for managing a production change in a building line (2) for at least one tyre component, said building line having a predefined cycle time, and said component being produced on a forming drum (10) comprising a central body (12) on which a first outer body (13) is fitted to define a forming surface (11) on which said at least one tyre component is produced, wherein there is provision for:
- separating said at least one component from said forming drum (10) in a final work station (3b) of said building line;
- modifying the forming surface of said forming drum by replacing, on said central body (12), said first outer body (13) with a second outer body (13') different from said first outer body;
- moving said forming drum (10) comprising said second outer body (13') to an initial work station (3a) of said building line,
**characterised in that** the central body is radially expansible, and
said first outer body (13) is replaced on said central body (12) with said second outer body (13') in a period of time equal to or less than the said cycle time and **in that** said replacing comprises the separation of said first outer body from said central body, said separation including:
- holding said first outer body (13) by means of a first outer-body support member (40) when said central body (12) is in a radially expanded condition; and
- contracting said central body (12) radially so as to separate said first outer body and said central body.

2. A method according to claim 1, wherein said replacing of said first outer body (13) on said central body with said second outer body (13') takes place in a period of time equal to or less than said cycle time reduced by the time required by said final work station (3b).

3. A method according to any one of the preceding claims wherein, during said replacing, said first and second outer bodies are moved away from and towards said central body (12), respectively, whilst being held in a fitted arrangement on respective support members (40, 40').

4. A method according to any one of the preceding claims wherein, when said first and second outer bodies are not fitted on said central body (12), they are placed in a store (6) whilst being held in a fitted arrangement on respective support members.

5. A method according to any one of the preceding claims wherein, during said replacing, the movement of said first and second outer bodies (13, 13') away from and towards said central body (12), respectively, is performed by means of a robotized arm (7).

6. A method according to any one of the preceding claims, wherein said replacing comprises the fitting-together of said second outer body (13') and said central body (12), said fitting-together including:
- arranging said central body in a radially contracted condition,
- moving said second outer body held in a fitted arrangement on a second outer-body support member (40'), to a position coaxial with and radially outside said central body,
- expanding said central body radially so as to fit said second outer body (13') and said central body (12) together,
- releasing said second outer body from said second support member.

7. A method according to any one of the preceding claims, wherein said cycle time is between about 60 and about 90 seconds.

8. A plant (1) comprising at least one building line (2) for at least one tyre component wherein a plurality of forming drums (10) is provided, each forming drum including a central body (12) on which an outer body (13) is fitted to define a forming surface (11) on which said at least one tyre component is produced, said building line comprising a plurality of successive work stations between which said forming drums are moved, wherein each movement from one work station to the next work station is performed within a predefined cycle time, wherein there are defined in said building line:
- an initial work station (3a);
- a final work station (3b) in which said forming drum is separated from said at least one tyre component built thereon;
- a replacing station (5) where said forming drum output from said final work station (3b) can be taken before being returned to said initial work station (3a) and where a first outer body (13) of said forming drum can be replaced by a second outer body (13'), different from the first outer body, on the same central body (12);
**characterised in that** the central body is radially expansible and **in that** the plant is so adapted that, in said replacing station (5), said first outer body (13) is replaced on said central body (12) with said second outer body (13') in a period of time equal to or less than the said cycle time,
and **in that** said plant comprises a first outer-body support member (40) arranged to hold said first outer body (13) when said central body (12) is in a radially expanded condition and allowing the separation of said first outer body from said central body when said central body (12) is radially contracted so that, in operating conditions, at a first moment, the forming drums that are present between the work stations are formed by a first set of central bodies and by a first set of outer bodies whereas, at a second moment following the first moment by a period of time equal to said cycle time, the forming drums that are present between the work stations are formed by a second set of central bodies identical to said first set of central bodies and by a second set of outer bodies that differs from said first set of outer bodies by at least one element.

9. A forming drum (10) for the building of at least one tyre component, the drum (10) comprising a central body (12) and an outer body (13) that is fitted on said central body in a radially outer position to define a forming surface (11) on which said at least one tyre component is produced and comprises a plurality of profiled sectors (14) each defining, on a radially outer side thereof, a portion of said forming surface (11), there being provided on said central body (12) and said outer body (13) quick coupling devices (20) which are arranged in a manner such that said central body (12) and said outer body (13) can be fitted together and separated by movement of said central body relative to said outer body, wherein said quick coupling devices (20) comprise at least one hook (21) which is provided on said central body (12) and which is resiliently pivotable in order to snap engage in a seat (22) provided on said outer body (13) and **characterised in that** each profiled sector (14) comprises, on its radially inner side, a rib (23) which is substantially parallel to an axial direction (X) of the forming drum and in which a groove (24) is formed, defining said seat.

10. A forming drum according to claim 9, wherein each rib (23) is engaged, in the same radial plane, by a pair of said hooks (21) which are arranged on opposite sides of said rib.

11. A forming drum according to any one of claims 9 to 10, wherein at least one inclined surface (33; 34) which is not perpendicular to the fitting direction is provided on said seat (22) and/or on said hook (21) to facilitate the release of said hook from said seat.

12. A forming drum according to any one of claims 9 to 11, wherein a pin (28) extends through said hook (21) in the region of a shank (25) thereof, said pin (28) being arranged parallel to a plane of pivoting of said hook and said hook (21) being urged against a head (29) of said pin by a resilient element (30).

13. A forming drum according to any one of claims 9 to 12, wherein said quick coupling devices (20) comprise a plurality of radial locating pins provided on one of said central body (12) and said outer body (13) and a corresponding plurality of holes in which the pins are housed in engagement, and which are formed on the other of said central body (12) and said outer body (13).

14. A plant according to claim 8, wherein said forming drums are according to any one of the claims 9 to 13.

## Patentansprüche

1. Verfahren zur Verwaltung einer Produktionsumstellung in einer Fertigungslinie (2) für zumindest eine Reifenkomponente, wobei die Fertigungslinie eine vordefinierte Zykluszeit aufweist,
und die Komponente an einer Formungstrommel (10) gefertigt wird, die einen Zentralkörper (12) aufweist, an dem ein erster äußerer Körper (13) fixiert wird, um eine Formungsoberfläche (11) zu bilden, an der die zumindest eine Reifenkomponente gefertigt wird, wobei Folgendes vorgesehen wird:
- Trennen der zumindest einen Komponente von der Formungstrommel (10) in einer letzten Arbeitsstation (3b) der Fertigungslinie;
- Modifizieren der Formungsoberfläche der Formungstrommel durch Austauschen des ersten äußeren Körpers (13) an dem Zentralkörper (12) durch einen zweiten äußeren Körper (13'), der sich von dem ersten äußeren Körper unterscheidet;
- Bewegen der Formungstrommel (10) umfassend den zweiten äußeren Körper (13') an eine erste Arbeitsstation (3a) der Fertigungslinie,
**dadurch gekennzeichnet, dass** der Zentralkörper (12) radial erweiterbar ist, und dass der erste äußere Körper (13) an dem Zentralkörper (12) gegen den zweiten äußeren Körper (13') in einer Zeitperiode ausgetauscht wird, die gleich oder kleiner als die Zykluszeit ist, und dass der Austauschvorgang die Trennung des ersten äußeren Körpers von dem Zentralkörper umfasst, wobei die Trennung Folgendes umfasst:
- Halten des ersten äußeren Körpers (13) mittels eines Trägerelements (40) für den ersten äußeren Körper, wenn der Zentralkörper (12) sich in einem radial erweiterten Zustand befindet; und
- radiales Zusammenziehen des Zentralkörpers (12), um den ersten äußeren Körper und den Zentralkörper voneinander zu trennen.

2. Verfahren nach Anspruch 1, wobei das Austauschen des ersten äußeren Körpers (13) an dem Zentralkörper gegen den zweiten äußeren Körper (13') in einer Zeitperiode erfolgt, die gleich oder kleiner als die Zykluszeit minus die für die letzte Arbeitsstation (3b) benötigte Zeit ist.

3. Verfahren nach einem der vorhergehenden Ansprüche wobei, während des Austauschens die ersten und zweiten äußeren Körper jeweils von dem Zentralkörper (12) weg bzw. zu diesem hin bewegt werden, während sie in fixierter Anordnung an jeweiligen Trägerelementen (40, 40') gehalten werden.

4. Verfahren nach einem der vorhergehenden Ansprüche, wobei die ersten und zweiten äußeren Körper, wenn sie nicht an dem Zentralkörper (12) fixiert sind, in einen Speicher (6) platziert werden, während sie in fixierter Anordnung an jeweiligen Trägerelementen gehalten werden.

5. Verfahren nach einem der vorhergehenden Ansprüche, wobei während des Austauschens die Bewegung der ersten und zweiten äußeren Körper (13, 13') von dem Zentralkörper (12) weg bzw. zu diesem hin jeweils mittels eines Roboterarms (7) erfolgt.

6. Verfahren nach einem der vorhergehenden Ansprüche, wobei das Austauschen das Fixieren des zweiten äußeren Körpers (13') und des Zentralkörper (12) aneinander umfasst, wobei das Fixieren umfasst:
- Anordnen des Zentralkörpers in einem radial zusammengezogenen Zustand,
- Bewegen des zweiten äußeren Körpers, der in einer fixierten Anordnung an einem Trägerelement (40') für den zweiten äußeren Körper gehalten wird, in eine Position koaxial mit und radial außerhalb des Zentralkörpers,
- radiales Erweitern des Zentralkörpers, so dass der zweite äußere Körper (13') und der Zentralkörper (12) aneinander fixiert werden,
- Lösen des zweiten äußeren Körpers von dem zweiten Trägerelement.

7. Verfahren nach einem der vorhergehenden Ansprüche, wobei die Zykluszeit zwischen etwa 60 und etwa 90 Sekunden beträgt.

8. Anlage (1) umfassend zumindest eine Fertigungslinie (2) für zumindest eine Reifenkomponente, wobei eine Vielzahl von Formungstrommeln (10) vorgesehen ist, wobei jede Formungstrommel einen Zentralkörper (12) umfasst, an dem ein äußerer Körper (13) fixiert ist, um eine Formungsoberfläche (11) zu definieren, an der die zumindest eine Reifenkomponente gefertigt wird, wobei die Fertigungslinie eine Vielzahl von aufeinander folgenden Arbeitsstationen umfassen, zwischen welchen die Formungstrommeln bewegt werden, wobei jede Bewegung von einer Arbeitsstation zur nächsten Arbeitsstation innerhalb einer vordefinierten Zykluszeit erfolgt, wobei in der Fertigungslinie Folgendes definiert ist:
- eine erste Arbeitsstation (3a);
- eine letzte Arbeitsstation (3b), in der die Formungstrommel von der zumindest einen darauf gefertigten Reifenkomponente getrennt wird;
- eine Austauschstation (5), wo die von der letzten Arbeitsstation (3b) ausgegebene Formungstrommel aufgenommen werden kann, bevor sie an die erste Arbeitsstation (3a) zurückgeführt wird, und wo ein erster äußerer Körper (13) der Formungstrommel gegen einen zweiten äußeren Körper (13') an demselben Zentralkörper (12) ausgetauscht werden kann, der sich von dem ersten äußeren Körper unterscheidet;
**dadurch gekennzeichnet, dass der** Zentralkörper radial erweiterbar ist,
und dass die Anlage so ausgestaltet ist, dass in der Austauschstation (S) der erste äußere Körper (13) an dem Zentralkörper (12) gegen den zweiten äußeren Körper (13') in einer Zeitperiode ausgetauscht wird, die gleich oder kleiner ist als die Zykluszeit,
und dass die Anlage ein Trägerelement (40) für den ersten äußeren Körper umfasst, das dazu angeordnet ist, den ersten äußeren Körper (13) zu halten, wenn der Zentralkörper (12) sich in einem radial erweiterten Zustand befindet, und die Trennung des ersten äußeren Körpers von dem Zentralkörper erlaubt, wenn der Zentralkörper (12) radial zusammengezogen wird, so dass im Betrieb in einem ersten Moment die Formungstrommeln, die sich zwischen den Arbeitsstationen befinden, von einem ersten Satz von Zentralkörper und einem ersten Satz von äußeren Körpern gebildet werden, während in einem zweiten Moment, der nach einer Zeitperiode gleich der Zykluszeit auf den ersten Moment folgt, die Formungstrommeln, die sich zwischen den Arbeitsstationen befinden, von einem zweiten Satz von äußeren Körpern gebildet wird, der sich von dem ersten Satz von äußeren Körpern durch zumindest ein Element unterscheidet.

9. Formungstrommel (10) zur Fertigung zumindest einer Reifenkomponente, wobei die Trommel (10) einen Zentralkörper (12) und einen äußeren Körper (13) umfasst, der an dem Zentralkörper in einer radial äußeren Position fixiert ist, um eine Formungsoberfläche (11) zu definieren, an der die zumindest eine Reifenkomponente gefertigt wird, und eine Vielzahl von profilierten Sektoren (14) umfasst, die jeweils an einer radial äußeren Seite desselben einen Abschnitt der Formungsoberfläche (11) definieren, wobei an dem Zentralkörper (12) und dem äußeren Körper (13) Schnellkopplungseinrichtungen (20) vorgesehen sind, die auf solche Weise angeordnet sind, dass der Zentralkörper (12) und der äußere Körper (13) durch Bewegung des Zentralkörpers relativ zu dem äußeren Körper aneinander fixiert und voneinander getrennt werden können, wobei die Schnellkopplungseinrichtungen (20) zumindest einen Haken (21) umfassen, der an Zentralkörper (12) vorgesehen ist und der elastisch schwenkbar ist, um in Schnappeingriff mit einem Sitz (22) zu gelangen, der an dem äußeren Körper (13) vorgesehen ist, und **dadurch gekennzeichnet, dass** jeder profilierte Sektor (14) an seiner radial inneren Seite eine Rippe (23) umfasst, die im Wesentlichen parallel zu einer axialen Richtung (X) der Formungstrommel ist und in der eine Nut (24) gebildet ist, die den Sitz definiert.

10. Formungstrommel nach Anspruch 9, wobei jede Rippe (23) in derselben radialen Ebene mit einem Paar der Haken (21) in Eingriff gelangt, die an beiden Seiten der Rippe angeordnet sind.

11. Formungstrommel nach einem der Ansprüche 9 bis 10, wobei zumindest eine geneigte Oberfläche (33; 34), die nicht senkrecht auf die Fixierungsrichtung steht, an dem Sitz (22) und/oder an dem Haken (21) vorgesehen ist, um das Lösen des Hakens aus dem Sitz zu erleichtern.

12. Formungstrommel nach einem der Ansprüche 9 bis 11, wobei ein Stift (28) sich durch den Haken (21) in dem Bereich eines Schafts (25) desselben erstreckt, wobei der Stift (28) parallel zu einer Schwenkebene des Hakens angeordnet ist, und wobei der Haken (21) durch ein elastisches Element (30) gegen einen Kopf (29) des Stifts gedrängt wird.

13. Formungstrommel nach einem der Ansprüche 9 bis 12, wobei die Schnellkopplungseinrichtungen (20) eine Vielzahl von radialen Positionierstiften umfassen, die an einem von Zentralkörper (12) oder äußerem Körper (13) vorgesehen sind, sowie eine entsprechende Vielzahl von Löchern, in denen die Stifte in Eingriff untergebracht sind, und die an dem jeweils anderen von Zentralkörper (12) und äußerem Körper (13) vorgesehen sind.

14. Anlage nach Anspruch 8, wobei die Formungstrommeln nach einem der Ansprüche 9 bis 13 ausgebildet sind.

## Revendications

1. Procédé de gestion d'un changement de production dans une chaîne de fabrication (2) pour au moins un composant de pneu, ladite chaîne de fabrication ayant un temps de cycle prédéfini, et ledit composant étant produit sur un tambour de formation (10) comprenant un corps central (12) sur lequel un premier corps extérieur (13) est ajusté pour définir une surface de formation (11) sur laquelle ledit au moins un composant de pneu est produit, dans lequel on prévoit :
- la séparation dudit au moins un composant dudit tambour de formation (10) dans un poste de travail final (3b) de ladite chaîne de fabrication ;
- la modification de la surface de formation dudit tambour de formation en remplaçant, sur ledit corps central (12), ledit premier corps extérieur (13) par un deuxième corps extérieur (13') différent dudit premier corps extérieur ;
- le déplacement dudit tambour de formation (10) comprenant ledit deuxième corps extérieur (13') vers un poste de travail initial (3a) de ladite chaîne de fabrication,
**caractérisé en ce que** le corps central (12) est radialement extensible, et
ledit premier corps extérieur (13) est remplacé sur ledit corps central (12) par ledit deuxième corps extérieur (13') dans une période de temps inférieure ou égale audit temps de cycle et **en ce que** ledit remplacement comprend la séparation dudit premier corps extérieur dudit corps central, ladite séparation comportant :
- le maintien dudit premier corps extérieur (13) au moyen d'un premier élément de support (40) de corps extérieur lorsque ledit corps central (12) se trouve dans un état radialement étendu ; et
- la contraction radiale dudit corps central (12) de manière à séparer ledit premier corps extérieur et ledit corps central.

2. Procédé selon la revendication 1, dans lequel ledit remplacement dudit premier corps extérieur (13) sur ledit corps central par ledit deuxième corps extérieur (13') se produit dans une période de temps inférieure ou égale audit temps de cycle réduit par le temps requis par ledit poste de travail final (3b).

3. Procédé selon l'une quelconque des revendications précédentes, dans lequel, pendant ledit remplacement, lesdits premier et deuxième corps extérieurs sont déplacés à distance dudit corps central (12) et vers celui-ci, respectivement, tout en étant maintenus dans un agencement ajusté sur des éléments de support respectifs (40, 40').

4. Procédé selon l'une quelconque des revendications précédentes, dans lequel, lorsque lesdits premier et deuxième corps extérieurs ne sont pas ajustés sur ledit corps central (12), ils sont placés dans un magasin (6) tout en étant maintenus dans un agencement ajusté sur des éléments de support respectifs.

5. Procédé selon l'une quelconque des revendications précédentes, dans lequel, pendant ledit remplacement, le déplacement desdits premier et deuxième corps extérieurs (13, 13') à distance dudit corps central (12) et vers celui-ci, respectivement, est effectué au moyen d'un bras robotisé (7).

6. Procédé selon l'une quelconque des revendications précédentes, dans lequel ledit remplacement comprend l'assemblage dudit deuxième corps extérieur (13') et dudit corps central (12), ledit assemblage comportant :
- l'agencement dudit corps central dans un état radialement contracté,
- le déplacement dudit deuxième corps extérieur maintenu dans un agencement ajusté sur un deuxième élément de support (40') de corps extérieur, vers une position coaxiale audit corps central et radialement à l'extérieur de celui-ci,
- l'extension radiale dudit corps central de manière à assembler ledit deuxième corps extérieur (13') et ledit corps central (12),
- la libération dudit deuxième corps extérieur dudit deuxième élément de support.

7. Procédé selon l'une quelconque des revendications précédentes, dans lequel ledit temps de cycle est compris entre environ 60 et environ 90 secondes.

8. Installation (1) comprenant au moins une chaîne de fabrication (2) pour au moins un composant de pneu, dans laquelle une pluralité de tambours de formation (10) sont prévus, chaque tambour de formation comportant un corps central (12) sur lequel un corps extérieur (13) est ajusté pour définir une surface de formation (11) sur laquelle ledit au moins un composant de pneu est produit, ladite chaîne de fabrication comprenant une pluralité de postes de travail successifs entre lesquels lesdits tambours de formation sont déplacés, où chaque déplacement d'un poste de travail au poste de travail suivant est effectué pendant un temps de cycle prédéfini, où dans ladite chaîne de fabrication, sont définis :
- un poste de travail initial (3a);
- un poste de travail final (3b) dans lequel ledit tambour de formation est séparé dudit au moins un composant de pneu construit sur celui-ci ;
- un poste de remplacement (5) dans lequel ledit tambour de formation délivré en sortie à partir dudit poste de travail final (3b) peut être prélevé avant d'être renvoyé dans ledit poste de travail initial (3a) et dans lequel un premier corps extérieur (13) dudit tambour de formation peut être remplacé par un deuxième corps extérieur (13'), différent du premier corps extérieur, sur le même corps central (12) ;
**caractérisée en ce que** le corps central est radialement extensible et **en ce que** l'installation est adaptée de sorte que, dans ledit poste de remplacement (5), ledit premier corps extérieur (13) soit remplacé sur ledit corps central (12) par ledit deuxième corps extérieur (13') dans une période de temps inférieure ou égale audit temps de cycle et **en ce que** ladite installation comprend un premier élément de support (40) de corps extérieur agencé pour maintenir ledit premier corps extérieur (13) lorsque ledit corps central (12) se trouve dans un état radialement étendu et permettant la séparation dudit premier corps extérieur dudit corps central lorsque ledit corps central (12) est radialement contracté de sorte que, dans des conditions de fonctionnement, à un premier moment, les tambours de formation qui sont présents entre les postes de travail soient formés par un premier ensemble de corps centraux et par un premier ensemble de corps extérieurs alors que, à un deuxième moment qui suit le premier moment, séparé de lui par une période de temps égale audit temps de cycle, les tambours de formation qui sont présents entre les postes de travail sont formés par un deuxième ensemble de corps centraux identique audit premier ensemble de corps centraux et par un deuxième ensemble de corps extérieurs qui diffère dudit premier ensemble de corps extérieurs par au moins un élément.

9. Tambour de formation (10) pour la construction d'au moins un composant de pneu, le tambour (10) comprenant un corps central (12) et un corps extérieur (13) qui est ajusté sur ledit corps central dans une position radialement extérieure pour définir une surface de formation (11) sur laquelle ledit au moins un composant de pneu est produit et comprend une pluralité de secteurs profilés (14) définissant chacun, sur un côté radialement extérieur de celui-ci, une partie de ladite surface de formation (11), des dispositifs d'accouplement rapide (20) sont prévus sur ledit corps central (12) et ledit corps extérieur (13), lesquels dispositifs sont agencés de manière à ce que ledit corps central (12) et ledit corps extérieur (13) puissent être assemblés et séparés par déplacement dudit corps central par rapport audit corps extérieur, où lesdits dispositifs d'accouplement rapide (20) comprennent au moins un crochet (21) qui est prévu sur ledit corps central (12) et qui peut pivoter élastiquement afin de s'encliqueter dans un siège (22) prévu sur ledit corps extérieur (13) et **caractérisé en ce que** chaque secteur profilé (14) comprend, sur son côté radialement intérieur, une nervure (23) qui est sensiblement parallèle à une direction axiale (X) du tambour de formation et dans laquelle est formée une rainure (24), définissant ledit siège.

10. Tambour de formation selon la revendication 9, dans lequel chaque nervure (23) est en prise, dans le même plan radial, avec une paire desdits crochets (21) qui sont agencés sur des côtés opposés de ladite nervure.

11. Tambour de formation selon l'une quelconque des revendications 9 et 10, dans lequel au moins une surface inclinée (33; 34), qui n'est pas perpendiculaire à la direction d'ajustement, est prévue sur ledit siège (22) et/ou sur ledit crochet (21) pour faciliter la libération dudit crochet dudit siège.

12. Tambour de formation selon l'une quelconque des revendications 9 à 11, dans lequel une broche (28) s'étend à travers ledit crochet (21) dans la région d'une tige (25) de celui-ci, ladite broche (28) étant agencée parallèlement à un plan de pivotement dudit crochet et ledit crochet (21) étant sollicité contre une tête (29) de ladite broche par un élément élastique (30).

13. Tambour de formation selon l'une quelconque des revendications 9 à 12, dans lequel lesdits dispositifs d'accouplement rapide (20) comprennent une pluralité de broches de positionnement radial prévues sur l'un dudit corps central (12) et dudit corps extérieur (13) et une pluralité correspondante de trous dans lesquels les broches sont reçues en prise, et qui sont formés sur l'autre dudit corps central (12) et dudit corps extérieur (13).

14. Installation selon la revendication 8, dans laquelle lesdits tambours de formation sont selon l'une quelconque des revendications 9 à 13.
